(19) Europäisches Patentamt / European Patent Office / Office européen des brevets

(11) **EP 3 030 867 B1**

(12) **FASCICULE DE BREVET EUROPEEN**

(45) Date de publication et mention de la délivrance du brevet:
**01.11.2017 Bulletin 2017/44**

(21) Numéro de dépôt: **14750172.0**

(22) Date de dépôt: **04.08.2014**

(51) Int Cl.:
*G01J 3/02* (2006.01)   *G01J 3/18* (2006.01)
*G02B 27/42* (2006.01)

(86) Numéro de dépôt international:
**PCT/EP2014/066721**

(87) Numéro de publication internationale:
**WO 2015/018790 (12.02.2015 Gazette 2015/06)**

(54) **SPECTROMETRE A PLUSIEURS RESEAUX DE DIFFRACTION.**

**SPEKTROMETER MIT EINER VIELZAHL VON BEUGUNGSGITTERN**

SPECTROMETER COMPRISING A PLURALITY OF DIFFRACTION GRATINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2013 FR 1357812**

(43) Date de publication de la demande:
**15.06.2016 Bulletin 2016/24**

(73) Titulaire: **Commissariat à l'Énergie Atomique et aux Énergies Alternatives**
**75015 Paris (FR)**

(72) Inventeur: **LUCE, Jacques**
**F-33470 Gujan-Mestras (FR)**

(74) Mandataire: **Brevalex**
**95, rue d'Amsterdam**
**75378 Paris Cedex 8 (FR)**

(56) Documents cités:
**US-A1- 2002 135 879**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne le domaine de la spectrométrie, c'est-à-dire la décomposition spectrale d'un faisceau lumineux et la détection des composantes spectrales ainsi isolées les unes des autres.

**ÉTAT DE LA TECHNIQUE ANTÉRIEURE**

L'invention concerne un spectromètre, c'est-à-dire un dispositif de spectrométrie comprenant des moyens de dispersion spectrale d'un faisceau lumineux, et un photo-détecteur pour mesurer une intensité lumineuse reçue après décomposition spectrale. On relie un emplacement d'une tâche lumineuse dans le plan du photo-détecteur, et une longueur d'onde, à l'aide d'un étalonnage en longueur d'onde. Pour cela, on utilise le spectromètre avec une source lumineuse de spectre connu (par exemple une lampe au mercure ou au tungstène), et on relève les emplacements des tâches lumineuses obtenues.

Le photo-détecteur peut recevoir simultanément plusieurs composantes spectrales du faisceau lumineux, de façon à mesurer simultanément une intensité lumineuse en fonction de la longueur d'onde. On utilise alors typiquement une caméra.

En variante, le photo-détecteur présente une surface réduite, et on déplace un faisceau lumineux incident relativement à ce photo-détecteur de façon à tracer point par point un spectre du faisceau lumineux incident, correspondant à l'intensité lumineuse en fonction de la longueur d'onde. On utilise alors typiquement une photodiode.

Dans tout le texte, le terme « spectrométrie » désignera toute technique de décomposition spectrale, et détection d'au moins une composante spectrale ainsi isolée. Notamment, on englobera sous ce terme non seulement la spectrographie, c'est-à-dire la détection simultanée de plusieurs composantes spectrales isolées spatialement, mais également des techniques de détections consécutives de ces plusieurs composantes spectrales, par déplacement d'un faisceau lumineux relativement à un détecteur.

Les moyens de dispersion spectrale peuvent comprendre un réseau de diffraction.

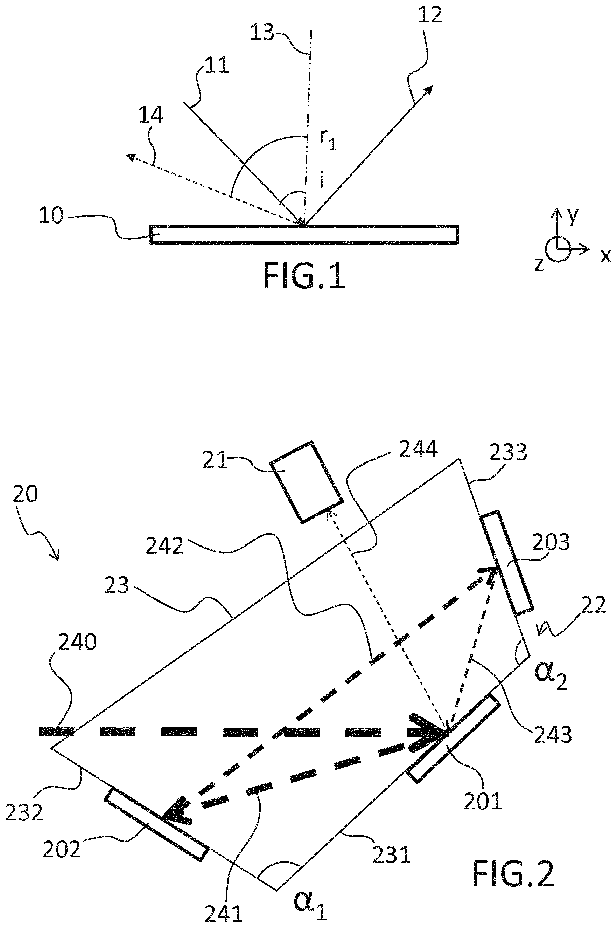

On a représenté sur la Figure 1 un réseau de diffraction en réflexion. Le réseau de diffraction 10 présente des bandes réfléchissantes ou traits, disposées périodiquement parallèlement à l'axe (Oz) du repère orthonormé (Oxyz) et dans le plan (xOz). La période définissant la disposition des bandes réfléchissantes est une longueur appelée pas du réseau. L'inverse du pas désigne la densité de trait, généralement exprimée en nombre de traits par millimètre.

Un faisceau lumineux 11 est incident sur le réseau de diffraction 10. Il forme un angle i avec la normale 13 au plan du réseau 10. Le faisceau lumineux 11 est monochromatique, de longueur d'onde $\lambda_0$. Il est renvoyé par le réseau de diffraction sous la forme de plusieurs sous-faisceaux :

- un sous-faisceau spéculaire 12, correspondant à une diffraction d'ordre 0 ou en d'autres termes à une réflexion spéculaire ;
- un sous-faisceau 14, formant un angle $r_1$ avec la normale 13 au plan du réseau 10, et correspondant à une diffraction d'ordre 1.

Pour des raisons de lisibilité de la figure, on n'a pas représenté les ordres de diffraction supérieurs à l'ordre 1.

Dans tout le texte, on nomme « réflexion spéculaire » la diffraction à l'ordre 0.

L'angle rm est déterminé par la loi des réseaux pour un réseau de diffraction en réflexion :

$$\sin(i) + \sin(r_m) = m*N*\lambda \qquad (1)$$

avec :

- i l'angle formé entre le faisceau lumineux incident 11 et la normale 13 au plan du réseau 10 ;
- rm l'angle formé entre le sous-faisceau correspondant à la diffraction d'ordre m, et la normale 13 au plan du réseau 10. On appelle également « faisceau lumineux diffracté à l'ordre m », le sous-faisceau correspondant à la diffraction d'ordre m ;
- $\lambda$ la longueur d'onde du faisceau lumineux diffracté d'ordre m ;
- N la densité de traits du réseau 10 ; et
- m l'ordre de diffraction considéré.

On voit que l'angle rm dépend de la longueur d'onde. Ainsi, le réseau de diffraction 10 permet de séparer spatialement différentes contributions spectrales d'un faisceau lumineux incident.

Un avantage des spectromètres comprenant un réseau de diffraction est qu'ils présentent une plage spectrale de mesure très importante, contrairement à d'autres types d'interféromètres tels que les interféromètres Fabry-Pérot ne pouvant analyser qu'une plage très étroite de longueurs d'onde.

L'inconvénient des spectromètres à réseau est cependant leur pouvoir de résolution très limité. En d'autres termes, leurs capacités de séparation spatiale des différentes longueurs d'onde sont limitées. On nomme « résolution » d'un spectromètre la plus petite différence de longueurs d'onde qu'il permet de distinguer. Le pouvoir de résolution d'un spectromètre est le rapport d'une longueur d'onde centrale sur la résolution correspondante. Ainsi, une valeur élevée du pouvoir de résolution correspond à une grande qualité du spectromètre. On montre que le pouvoir de résolution d'un réseau de diffraction dépend du nombre de traits éclairés par le faisceau lumineux incident. Par exemple, on peut distinguer des largeurs de raie d'environ 30 GHz pour une longueur d'onde de 1 $\mu$m avec un réseau de diffraction de 1200 traits/mm éclairé par un faisceau lumineux de 30 mm de diamètre.

On voit donc qu'une solution pour réaliser un spectromètre à réseau présentant un pouvoir de résolution élevé, consiste à augmenter la largeur du faisceau lumineux incident, et par conséquent les dimensions du réseau de diffraction. Un inconvénient de cette solution est que le coût d'un réseau de diffraction augmente avec sa taille.

On connaît dans l'art antérieur le document WO 99/13543, qui décrit un spectromètre comprenant un réseau de diffraction en réflexion et un miroir partiellement réfléchissant. Une portion d'un faisceau optique traverse le miroir partiellement réfléchissant avant d'atteindre le réseau de diffraction, et effectue au moins un aller-retour entre le miroir partiellement réfléchissant et le réseau de diffraction, avant de traverser de nouveau le miroir partiellement réfléchissant. Cette portion de faisceau optique est donc diffractée au moins deux fois par le réseau de diffraction. Le nombre de traits éclairés par cette portion de faisceau optique correspond à la somme du nombre de traits éclairés à chaque incidence sur le réseau de diffraction en réflexion. On réalise ainsi un spectromètre à réseau présentant un pouvoir de résolution élevé, sans modifier le pas du réseau ni augmenter la taille du réseau.

Un inconvénient d'un tel spectromètre est que la portion du faisceau incident, diffractée plusieurs fois par le même réseau de diffraction, présente une intensité lumineuse très faible du fait de ses passages par le miroir partiellement réfléchissant.

On connaît aussi le document US20020135879, qui décrit en figure 11 et dans les paragraphes [0057], [0058] un résonateur employant une cascade de réseaux de diffraction.

Un objectif de la présente invention est de proposer un spectromètre à réseau de diffraction qui ne présente pas au moins l'un des inconvénients de l'art antérieur.

En particulier, un but de la présente invention est de proposer un spectromètre à réseau de diffraction présentant un grand pouvoir de résolution, pour un coût réduit.

Un autre but de la présente invention est de proposer un spectromètre à réseau de diffraction présentant des pertes d'intensité lumineuse réduites.

## EXPOSÉ DE L'INVENTION

Cet objectif est atteint avec un spectromètre comprenant des moyens de dispersion spectrale d'un faisceau lumineux initial tel que défini dans la revendication 1. Selon l'invention, les moyens de dispersion spectrale comprennent au moins trois réseaux de diffraction en réflexion, disposés de sorte qu'une portion du faisceau lumineux initial est diffractée tour à tour par chacun des réseaux de diffraction et est diffractée au moins une deuxième fois par au moins un des réseaux de diffraction.

Le spectromètre selon l'invention comprend avantageusement un photo-détecteur, pour mesurer l'intensité lumineuse d'un faisceau lumineux incident.

Ladite portion du faisceau lumineux initial forme alors le faisceau lumineux incident sur le photo-détecteur.

On peut considérer que les réseaux de diffraction en réflexion sont parallèles à des côtés consécutifs d'un polygone convexe.

On considère la projection orthogonale des réseaux de diffraction dans un plan, le polygone convexe étant défini dans ce plan. Il s'agit avantageusement du plan de propagation de ladite portion du faisceau lumineux initial, les réseaux de diffraction étant disposés orthogonaux à ce plan. En d'autres termes, les réseaux de diffraction présentent de préférence des traits parallèles entre eux, et orthogonaux à un plan dans lequel on définit ledit polygone convexe.

De préférence, les réseaux de diffraction en réflexion sont alignés sur les côtés consécutifs du polygone convexe. En d'autres termes, chaque réseau de diffraction n'est pas seulement parallèle à un côté de polygone, mais confondu avec au moins une partie de ce côté de polygone.

Selon un mode de réalisation avantageux, un premier réseau de diffraction est disposé entre un deuxième réseau de diffraction et un troisième réseau de diffraction.

De préférence, les premier, deuxième et troisième réseaux de diffraction sont disposés de sorte que :

- le premier réseau de diffraction reçoit un premier faisceau lumineux et renvoie un premier sous-faisceau, correspondant à la diffraction d'ordre $m_1$ du premier faisceau lumineux sur le premier réseau de diffraction, avec $m_1$ entier supérieur ou égal à l'unité ;
- le deuxième réseau de diffraction reçoit le premier sous-faisceau et renvoie un deuxième sous-faisceau, correspondant à la diffraction d'ordre $m_2$ du premier sous-faisceau sur le deuxième réseau de diffraction, avec $m_2$ entier supérieur ou égal à l'unité ;
- le troisième réseau de diffraction reçoit le deuxième sous-faisceau et renvoie un troisième sous-faisceau, correspondant à la diffraction d'ordre $m_3$ du deuxième sous-faisceau sur le troisième réseau de diffraction, avec $m_3$ entier supérieur ou égal à l'unité ; et
- le premier réseau de diffraction reçoit le troisième sous-faisceau et renvoie un quatrième sous-faisceau, correspondant à la diffraction d'ordre $m_4$ du troisième sous-faisceau sur le premier réseau de diffraction, avec $m_4$ entier supérieur ou égal à l'unité.

De préférence, les ordres $m_1$, $m_2$, $m_3$, et $m_4$ sont égaux.

Les ordres $m_1$, $m_2$, $m_3$, et $m_4$ sont avantageusement égaux à l'unité.

Un angle entre les premier et deuxième réseaux de diffraction peut être égal à un angle entre les premier et troisième réseaux de diffraction.

Les réseaux de diffraction sont avantageusement alignés sur des côtés consécutifs d'un polygone régulier.

Les réseaux de diffraction peuvent être disposés de façon à ce que :

- chaque réseau de diffraction reçoive un faisceau lumineux incident, et renvoie un sous-faisceau correspondant à la diffraction d'ordre $m_i$ du faisceau lumineux incident sur ledit réseau de diffraction, avec $m_i$ entier supérieur ou égal à l'unité ;
- une valeur absolue d'une différence entre un angle d'incidence du faisceau lumineux incident sur le réseau de diffraction, et un angle médian du sous-faisceau relativement audit réseau de diffraction, soit la même à plus ou moins six degrés près pour chaque réseau de diffraction.

Un chemin optique suivi par ladite portion du faisceau lumineux initial peut relier directement un réseau de diffraction au suivant.

De préférence, chaque réseau de diffraction présente des rayures réfléchissantes parallèles à un axe de référence, et est monté sur des moyens de pivotement autour de l'axe de référence.

Chacun des réseaux de diffraction peut présenter un même pas de réseau.

Un angle entre deux réseaux de diffraction consécutifs est avantageusement compris entre 140 ° et 160 °, chaque réseau de diffraction présentant une densité de traits égale à 1740 traits par millimètre.

L'invention concerne également un procédé d'utilisation d'un spectromètre selon l'invention, selon lequel on adapte ledit spectromètre à une longueur d'onde centrale du faisceau lumineux incident en pivotant chacun des réseaux de diffraction alternativement d'un angle $\theta$ et d'un angle $-\theta$.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la Figure 1 illustre un réseau de diffraction en réflexion ;
- la Figure 2 illustre de façon schématique un spectromètre selon l'invention ;
- la Figure 3 illustre un premier mode de réalisation de spectromètre selon l'invention ; et
- la Figure 4 illustre un deuxième mode de réalisation de spectromètre selon l'invention.

## EXPOSÉ DÉTAILLÉ DE MODES DE RÉALISATION PARTICULIERS

La Figure 2 représente de façon schématique un spectromètre 20 selon l'invention.

Le spectromètre 20 comprend :

- un photo-détecteur 21 tel que décrit en introduction, pour mesurer l'intensité lumineuse d'un faisceau incident ; et
- des moyens de dispersion spectrale 22 selon l'invention.

Les moyens de dispersion spectrale 22 comprennent au moins trois réseaux de diffraction en réflexion. Sur la Figure 2, on a représenté l'exemple de trois réseaux de diffraction en réflexion 201, 202, 203.

Les réseaux de diffraction en réflexion 201, 202, 203 sont chacun alignés sur un côté 231, 232, respectivement 233 d'un polygone convexe 23. Les côtés 232, 231, 233 sont des côtés consécutifs du polygone 23. Ils dessinent ensemble un polygone ouvert. En d'autres termes, le polygone convexe 23 présente plus de côtés qu'il y a de réseaux de diffraction en réflexion.

Dans tout le texte, les réseaux de diffraction sont numérotés dans l'ordre selon lequel ils sont atteints pour la première fois par le faisceau lumineux initial (décomposé en sous-faisceaux au fur et à mesure des diffractions, comme décrit dans la suite).

Les réseaux de diffraction 201, 202, 203 sont disposés de sorte qu'une portion d'un faisceau lumineux initial 240 est diffractée tour à tour une fois par chacun des réseaux de diffraction, et au moins une deuxième fois par au moins un des réseaux de diffraction.

En particulier, le premier réseau de diffraction 201 reçoit le faisceau lumineux initial 240, et renvoie un premier sous-faisceau 241 correspondant à l'ordre de diffraction $m_1$ du faisceau lumineux initial 240 sur le premier réseau de diffraction 201 ($m_1$ est un entier supérieur ou égal à l'unité).

Le deuxième réseau de diffraction 202 reçoit le premier sous-faisceau 241, et renvoie un deuxième sous-faisceau 242 correspondant à l'ordre de diffraction $m_2$ du premier sous-faisceau 241 sur le deuxième réseau de diffraction 202 ($m_2$ est un entier supérieur ou égal à l'unité).

Le troisième réseau de diffraction 203 reçoit le deuxième sous-faisceau 242, et renvoie un troisième sous-faisceau 243 correspondant à l'ordre de diffraction $m_3$ du deuxième sous-faisceau 242 sur le troisième réseau de diffraction 203 ($m_3$ est un entier supérieur ou égal à l'unité).

Le premier réseau de diffraction 201 reçoit le troisième sous-faisceau 243, et renvoie un quatrième sous-faisceau 244 correspondant à l'ordre de diffraction $m_4$ du troisième sous-faisceau 243 sur le premier réseau de diffraction 201 ($m_4$ est un entier supérieur ou égal à l'unité).

Ainsi, selon l'invention, les réseaux de diffraction sont agencés de sorte que le chemin optique suivi par ladite portion de faisceau lumineux relie directement le premier réseau de diffraction au deuxième réseau de diffraction, le deuxième réseau de diffraction au troisième réseau de diffraction, et le troisième réseau de diffraction au premier réseau de diffraction.

En d'autres termes, ce chemin optique relie directement le premier réseau de diffraction au deuxième réseau de diffraction, puis immédiatement le deuxième réseau de diffraction au troisième réseau de diffraction, puis immédiatement le troisième réseau de diffraction au premier réseau de diffraction.

L'invention repose sur cet agencement particulier des réseaux de diffraction. La présence du photo-détecteur n'est donc pas nécessaire pour définir un spectromètre nouveau et inventif.

On a introduit un polygone convexe simplement pour préciser plus avant le positionnement des réseaux de diffraction les uns relativement aux autres. Ce positionnement peut être défini simplement par le chemin optique tel que décrit ci-dessus.

La position des réseaux de diffraction peut être adaptée à n'importe quel faisceau lumineux initial émis par une source lumineuse, de façon à vérifier la condition sur le chemin optique telle que définie ci-dessus.

Le quatrième sous-faisceau 244 est dirigé vers le photo-détecteur 21.

Le quatrième sous-faisceau 244 correspond à une portion du faisceau lumineux initial ayant été diffractée une fois par les deuxième et troisième réseaux de diffraction 202 et 203, et ayant été diffractée deux fois par le premier réseau de diffraction 201.

Ainsi, le chemin optique suivi par ladite portion de faisceau lumineux relie directement le premier réseau de diffraction au deuxième réseau de diffraction, le deuxième réseau de diffraction au troisième réseau de diffraction, puis le troisième réseau de diffraction au premier réseau de diffraction. Ensuite, c'est-à-dire immédiatement après cette deuxième incidence sur le premier réseau de diffraction, ledit chemin optique ne relie pas directement le premier réseau de diffraction au deuxième réseau de diffraction. Cette particularité concerne chacun des modes de réalisation d'un spectromètre selon l'invention. Par conséquent, le spectromètre 20 selon l'invention ne forme pas un résonateur. De la même façon, le spectromètre 20 selon l'invention ne forme pas une cavité fermée.

De préférence, les ordres de diffraction $m_1$, $m_2$, $m_3$ et $m_4$ sont les mêmes et prennent avantageusement une valeur inférieure ou égale à 2, de préférence 1.

Ainsi, un faisceau lumineux initial de diamètre $d$ va couvrir deux réseaux une fois, et un réseau deux fois. Le faisceau lumineux initial effectue quatre passages sur un réseau de diffraction. En supposant que les pas des réseaux sont tous identiques, le pouvoir de résolution du spectromètre 20 est donc équivalent à celui d'un spectromètre recevant un faisceau lumineux de diamètre 4d, et comprenant par conséquent un réseau de diffraction quatre fois plus large. De façon générale, le faisceau lumineux initial de diamètre d va couvrir $N$ réseaux une première fois, et $s$ réseaux au moins une deuxième fois, $N$ étant un entier supérieur ou égal à 3 et $s$ un entier supérieur ou égal à 1. En d'autres termes, ($N-s$) réseaux sont couverts une fois, et $s$ réseaux sont couverts au moins deux fois. Le pouvoir de résolution d'un spectromètre selon l'invention est donc au moins équivalent à celui d'un spectromètre recevant un faisceau lumineux de diamètre ($N+s$)*$d$, et comprenant par conséquent un réseau de diffraction ($N+s$) fois plus large.

L'invention est basée sur l'utilisation de plusieurs réseaux de diffraction dont l'un au moins est utilisé deux fois.

Elle n'est pas basée sur l'utilisation d'un réseau de diffraction de grande taille. Grâce à l'invention, on obtient un spectromètre présentant un fort pouvoir de résolution à l'aide de réseaux de diffraction présentant une taille réduite, donc un coût moindre. On réalise ainsi un spectromètre présentant un coût et un encombrement réduits. En outre, il n'est pas nécessaire d'avoir recours à des optiques de mise en forme d'un faisceau lumineux émis par une source à étudier, afin d'obtenir une grande largeur de faisceau. Cela contribue à diminuer le coût et l'encombrement du spectromètre selon l'invention.

On peut notamment obtenir un pouvoir de résolution du même ordre que ceux pouvant être obtenus par méthode interférométrique, par exemple à l'aide d'un spectromètre de type Fabry-Pérot ou Fizeau. L'invention est d'autant plus avantageuse qu'elle offre une meilleure précision de détermination de la longueur d'onde qu'un spectromètre de type Fabry-Pérot, dans lequel il existe une dépendance spatio-spectrale.

On voit en outre que les sous-faisceaux peuvent se propager directement d'un réseau de diffraction au suivant, c'est-à-dire sans passer par une optique telle qu'une optique au moins partiellement réfléchissante. En d'autres termes, le chemin optique suivi par la portion de faisceau lumineux initial correspondant au sous-faisceau 244, relie directement un réseau de diffraction au suivant, sans réflexion intermédiaire sur un miroir intercalaire. Il n'y a donc pas de pertes énergétiques par absorption dans une optique située entre les réseaux de diffraction, ou par transmission ou réflexion seulement partielle d'un faisceau entre deux passages sur un réseau de diffraction. Le spectromètre selon l'invention présente donc des pertes d'intensité lumineuse réduites. On peut ainsi l'utiliser pour étudier le spectre d'un faisceau lumineux initial de faible intensité lumineuse, sans qu'il soit nécessaire de recourir en sortie à un photo-détecteur particulièrement sensible. En outre, l'absence d'optiques supplémentaires entre les réseaux de diffraction contribue à diminuer le coût et l'encombrement du spectromètre selon l'invention.

Il n'est pas non plus nécessaire de positionner les réseaux en phase, ce qui facilite l'ajustement des positions de chacun des réseaux de diffraction du spectromètre selon l'invention.

Avantageusement, le faisceau lumineux initial 240 est incident sur le premier réseau de diffraction 201 selon une incidence rasante, c'est-à-dire avec un angle d'incidence supérieur à 60°. En d'autres termes, dans la formule (1) présentée en introduction, le terme m*N*λ est avantageusement compris entre 1,5 et 1,8.

L'homme du métier saura aisément déterminer diverses géométries d'un spectromètre selon l'invention, permettant d'obtenir un premier passage sur chacun des réseaux de diffraction, et au moins un deuxième passage sur l'un d'eux. Il lui suffira pour cela de :

- résoudre un système d'équations basé sur la loi des réseaux (voir équation (1)) s'appliquant pour chaque passage sur un réseau de diffraction ; et
- considérer plusieurs conditions aux limites.

Ces conditions aux limites sont par exemple une longueur d'onde centrale du faisceau lumineux initial (correspondant à un pic d'intensité dudit faisceau), une densité de traits des réseaux de diffraction, un ordre de diffraction à considérer, etc. On peut également poser comme condition que la différence entre l'angle d'incidence et l'angle de diffraction à l'ordre considéré présente sensiblement la même valeur absolue pour chaque réseau de diffraction (à quelques degrés près, par exemple ± 6°, ou ± 2°, voire ± 1°). Cette différence peut être alternativement positive et négative (en considérant l'ordre chronologique des incidences successives sur les réseaux de diffraction).

Par exemple, on réalise un spectromètre selon l'invention, adapté à un faisceau lumineux initial de longueur d'onde centrale 632 nm, ledit faisceau arrivant sur le premier réseau de diffraction avec un angle d'incidence égal à 40°. L'ordre de diffraction considéré est le deuxième ordre de diffraction. Un tel spectromètre présente les caractéristiques suivantes :

- trois réseaux de diffraction présentant tous une densité de traits égale à 1200 traits par millimètre ;
- un angle $\alpha_1$ entre les premier et deuxième réseaux de diffraction égal à 124° ; et
- un angle $\alpha_2$ entre les premier et troisième réseaux de diffraction égal à 130,7°.

Ainsi, le faisceau lumineux incident 240 arrive sur le premier réseau de diffraction 201 selon un angle d'incidence $i_1=40°$, et un premier sous-faisceau 241 repart selon un angle de diffraction au deuxième ordre $r_{2-1}=61°$.

Le premier sous-faisceau 241 arrive sur le deuxième réseau de diffraction 202 selon un angle d'incidence $i_2=63°$, et un deuxième sous-faisceau 242 repart selon un angle de diffraction au deuxième ordre $r_{2-2}=38,7°$.

Le deuxième sous-faisceau 242 arrive sur le troisième réseau de diffraction 203 selon un angle d'incidence $i_3=36°$, et un troisième sous-faisceau 243 repart selon un angle de diffraction au deuxième ordre $r_{2-3}=68,3°$.

Le troisième sous-faisceau 243 arrive sur le premier réseau de diffraction 201 selon un angle d'incidence $i_4=62,4°$, et un quatrième sous-faisceau 244 repart selon un angle de diffraction au deuxième ordre $r_{2-4}=39°$.

Les sous-faisceaux 241, 242, 243, 243 et le faisceau 240 se propagent avantageusement dans un même plan, orthogonal à la direction des traits des réseaux de diffraction 201, 202, 203.

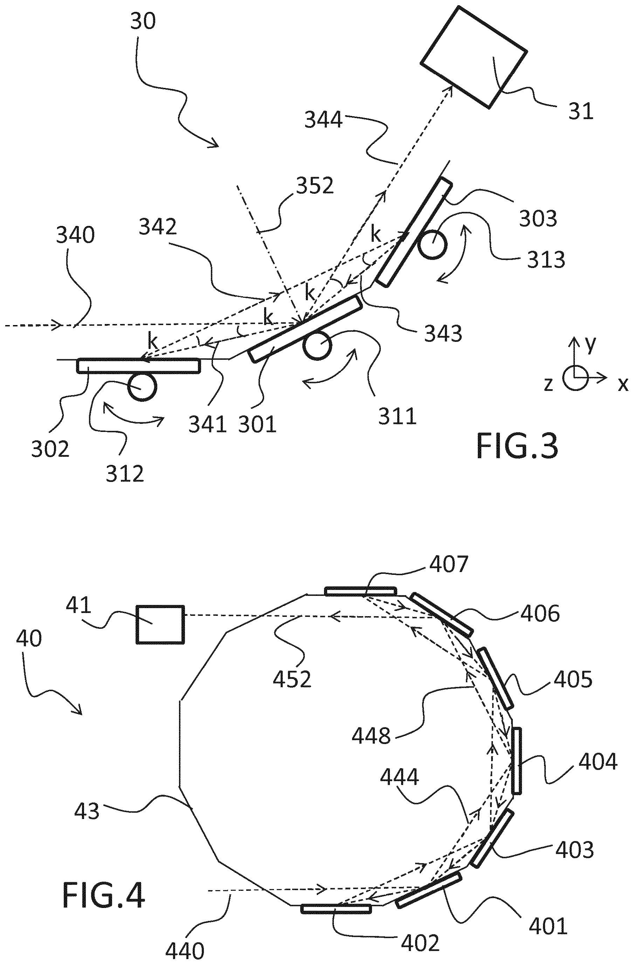

La Figure 3 illustre un premier mode de réalisation de spectromètre 30 selon l'invention. Le mode de réalisation de la Figure 3 est un cas particulier du spectromètre illustré en Figure 2. Le spectromètre de la Figure 3 est adapté à recevoir un faisceau lumineux incident présentant une longueur d'onde centrale de 1053 nm, et incident avec un angle de 61° environ sur le premier réseau de diffraction.

Sur la Figure 3, le spectromètre 30 comprend des moyens de dispersion spectrale formés par trois réseaux de diffraction 302, 301, 303 disposés sur des côtés consécutifs d'un polygone, avantageusement un dodécagone régulier.

Le réseau de diffraction 301 forme un premier réseau de diffraction. Le réseau 301 est disposé entre un deuxième réseau de diffraction 302 et un troisième réseau de diffraction 303, c'est-à-dire encadré latéralement par ces deux autres réseaux de diffraction, comme illustré sur la Figure 3.

Chacun des réseaux de diffraction présente une densité de traits égale à 1740 traits par millimètre.

L'angle formé entre les premier et deuxième réseaux de diffraction 301, 302 est égal à l'angle formé entre les premier et troisièmes réseaux de diffraction 301, 303, soit un angle de 150°. On réalise ainsi une structure présentant sensiblement une symétrie par rapport à un plan parallèle aux traits du premier réseau de diffraction et passant par le centre de ce réseau de diffraction 301. Les traits des réseaux de diffraction sont parallèles à l'axe (Oz), et orthogonaux au plan de propagation des faisceaux lumineux (Oxy).

En variante, chaque angle pourra être différent et compris entre 148° et 152°.

Le premier réseau de diffraction 301 reçoit le faisceau lumineux initial 340 et renvoie un premier sous-faisceau 341, correspondant au premier ordre de diffraction du faisceau lumineux initial sur le premier réseau de diffraction.

Le deuxième réseau de diffraction 302 reçoit le premier sous-faisceau 341 et renvoie un deuxième sous-faisceau 342, correspondant au premier ordre de diffraction du premier sous-faisceau sur le deuxième réseau de diffraction.

Le troisième réseau de diffraction 303 reçoit le deuxième sous-faisceau 342 et renvoie un troisième sous-faisceau 343, correspondant au premier ordre de diffraction du deuxième sous-faisceau sur le troisième réseau de diffraction.

Le premier réseau de diffraction 301 reçoit le troisième sous-faisceau 343 et renvoie un quatrième sous-faisceau 344, correspondant au premier ordre de diffraction du troisième sous-faisceau sur le premier réseau de diffraction.

Le quatrième sous-faisceau 344 est reçu par le photo-détecteur 31.

Le faisceau lumineux initial 340 est incident sur le premier réseau de diffraction 301 selon un angle d'incidence de 61°. Cet angle est mesuré relativement à la normale 352 au premier réseau de diffraction 301. L'angle d'incidence est choisi proche de 60°, à 2° près. Cet angle doit être différent de 60,2° pour éviter que le quatrième sous-faisceau 344 ne se propage dans la même direction que la réflexion spéculaire du faisceau lumineux initial 340 sur le premier réseau de diffraction 301 (diffraction à l'ordre 0).

Selon l'invention, le faisceau lumineux initial présente un maximum d'intensité à une longueur d'onde centrale connue. De préférence, il s'agit d'une longueur d'onde dans l'infrarouge (avantageusement comprise entre 1 μm et 2 μm). Ici, la longueur d'onde centrale est égale à 1053 nm. Le spectromètre 30 permet de déterminer les autres composantes spectrales du faisceau lumineux initial, proches de cette longueur d'onde centrale. La plage de mesure est typiquement de 200 nm. On voit donc que le spectromètre selon l'invention présente une bonne acceptance spectrale, pouvant atteindre 200 nm de largeur.

En variante, la longueur d'onde centrale n'est pas connue avec précision, et on ajuste au moins un paramètre du spectromètre selon l'invention de façon à pouvoir détecter sur le photo-détecteur 31 un signal lumineux correspondant à un faisceau diffracté deux fois sur le réseau 301 et une fois sur les réseaux 302 et 303. En particulier, on peut modifier un angle d'incidence du faisceau lumineux initial sur le premier réseau de diffraction 301. On peut également modifier séparément l'orientation de chacun des réseaux de diffraction 301, 302, 303.

Sur la Figure 3, chacun des réseaux de diffraction 301, 302, 303 est monté sur des moyens de pivotement respectifs 311, 312, 313, autour de l'axe z. L'axe z est parallèle aux traits ou bandes réfléchissantes des réseaux de diffraction 301, 302, 303. En pivotant les réseaux autour de ces moyens de pivotement, on peut ajuster la géométrie du spectromètre 30 selon l'invention en fonction d'une longueur d'onde centrale du faisceau lumineux initial. On réalise ainsi un spectromètre accordable en longueur d'onde.

En particulier, on ajuste l'orientation des réseaux de diffraction du spectromètre selon l'invention en pivotant chacun des réseaux alternativement d'un angle θ et d'un angle -θ (les réseaux de diffraction étant alors considérés dans l'ordre selon lequel ils sont répartis sur les côtés consécutifs du polygone, ici un dodécagone). Dans l'exemple de la Figure 3, on pivote les deuxième et troisième réseaux de diffraction 302, 303 d'un angle -θ, et on pivote le premier réseau de diffraction 301 d'un angle θ. On peut ainsi adapter le spectromètre de la Figure 3 à un faisceau lumineux initial de longueur d'onde centrale pouvant varier entre 1000 nm et 1200 nm. On relève que dans le texte, la numérotation des réseaux de diffraction est réalisée en considérant l'ordre selon lequel une partie du faisceau lumineux incident se propage de réseau en réseau. Néanmoins, pour le pivotement des réseaux alternativement d'un angle θ et d'un angle -θ, on considère les réseaux de diffraction dans l'ordre selon lequel ils sont répartis sur les côtés consécutifs du polygone.

On pourra prévoir d'autres moyens pour réaliser un spectromètre accordable en longueur d'onde, notamment des moyens de translation d'un réseau de diffraction dans le plan (xOy) orthogonal à l'axe (Oz).

On peut modifier en conséquence l'emplacement du photo-détecteur 31 relativement aux moyens de dispersions spectrales. Le photo-détecteur 31 peut alors être monté sur une platine mobile, de façon à pouvoir recevoir un faisceau lumineux souhaité.

Dans une variante préférée, le photo-détecteur 31 est fixe. On peut alors prévoir un miroir mobile pour déplacer ledit faisceau lumineux souhaité relativement au photo-détecteur.

Chaque réseau de diffraction reçoit un faisceau lumineux incident, et renvoie un sous-faisceau correspondant au premier ordre de diffraction dudit faisceau incident sur ce réseau de diffraction.

On remarque que la géométrie telle que décrite en référence à la Figure 3 est particulièrement avantageuse en ce qu'elle présente une certaine périodicité. En particulier, la valeur absolue de la différence entre :

- l'angle d'incidence du faisceau lumineux incident sur un réseau de diffraction ; et
- un angle médian du sous-faisceau relativement audit réseau de diffraction ; est la même (à quelques degrés près, par exemple $\pm 6°$, ou $\pm 2°$, voire même $\pm 1°$), pour chacun des réseaux de diffraction. Ladite différence entre ces deux angles est notée k sur la Figure 3. On parle d'angle médian, car les différentes contributions spectrales du faisceau lumineux incident sont séparées spatialement dans le sous-faisceau considéré. L'angle médian correspond à l'angle de diffraction à la longueur d'onde centrale, ici 1053 nm.

On pourra prévoir des moyens de guidage ou de positionnement (non représentés) pour une source lumineuse à étudier, adaptés à positionner ladite source de façon à ce que le faisceau lumineux initial présente un angle d'incidence souhaité sur le premier réseau de diffraction. Ces moyens de guidage peuvent être disposés sur une platine mobile, de façon à pouvoir modifier cet angle d'incidence en fonction de la source lumineuse.

Selon une variante non représentée, le faisceau lumineux initial est amené en entrée du spectromètre selon l'invention par une fibre optique d'ouverture numérique 0,12. En sortie de la fibre optique, on place une lentille de collimation.

Le photo-détecteur est avantageusement un détecteur présentant une zone de détection surfacique, à deux dimensions. Un avantage d'un tel détecteur est que l'on peut obtenir le spectre du faisceau lumineux incident par analyse d'une unique impulsion lumineuse. En utilisant l'axe perpendiculaire à l'axe d'étalement des composantes spectrales du faisceau lumineux initial, on peut détecter simultanément des spectres de plusieurs faisceaux lumineux, incidents sur les moyens de dispersion spectrale du spectromètre selon l'invention. Les faisceaux lumineux se propagent dans des plans parallèles au plan (xOy). On nomme cette technique « multiplexage de plusieurs voies de mesure ».

Le photo-détecteur est par exemple une caméra de 2456x2058 pixels, et présentant une largeur de pixel de 3,45 $\mu$m. En sortie des moyens de dispersion, on place avantageusement une lentille de focalisation (non représentée) qui permet de transformer une dispersion angulaire par les moyens de dispersion, en un déplacement latéral sur le photo-détecteur. La distance focale de cette lentille de focalisation est déterminée en prenant en compte la taille de pixel du photo-détecteur, de façon à ce que cette taille de pixel ne limite pas le pouvoir de résolution du spectromètre selon l'invention.

En variante, le photo-détecteur est une photodiode, pour une utilisation avec des signaux récurrents.

La Figure 4 représente de façon schématique un deuxième mode de réalisation de spectromètre 40 selon l'invention. Le mode de réalisation de la Figure 4 est un cas particulier du spectromètre illustré en Figure 2.

Le spectromètre de la Figure 4 est adapté à recevoir un faisceau lumineux incident présentant une longueur d'onde centrale de 1053 nm, et incident avec un angle de 61° environ sur le premier réseau de diffraction.

Le spectromètre 40 de la Figure 4 comprend sept réseaux de diffraction 402, 401, 403, 404, 405, 406 et 407, disposés sur des côtés consécutifs d'un dodécagone régulier 43.

Les réseaux de diffraction 401, 402, 403 correspondent aux réseaux de diffraction 301, 302, 302 du spectromètre de la Figure 3. Le faisceau initial 440 correspond au faisceau initial 340 de la Figure 3. Le sous-faisceau 444 correspond au sous-faisceau 344 de la Figure 3.

Le sous-faisceau 444 est incident sur le quatrième réseau de diffraction 404 avec un angle d'incidence de 61°. On retrouve, avec les réseaux de diffraction 404, 403, 405 la géométrie correspondant aux réseaux de diffraction 401, 402, 403.

Ainsi, après une diffraction au premier ordre sur les réseaux 403 et 405, et deux diffractions au premier ordre sur le réseau 404, on obtient le sous-faisceau 448. Le sous-faisceau 448 est incident sur le sixième réseau de diffraction 406 avec un angle d'incidence de 61°. On retrouve, avec les réseaux de diffraction 406, 405, 407 la géométrie correspondant aux réseaux de diffraction 401, 402, 403.

Après une diffraction au premier ordre sur les réseaux 405 et 407, et deux diffractions au premier ordre sur le réseau 406, on obtient le sous-faisceau 452. Le sous-faisceau 452 est dirigé vers le photo-détecteur 41.

On pourrait continuer cet enchaînement régulier de réseaux de diffraction.

En variante, les réseaux de diffraction ne sont pas alignés sur des côtés consécutifs d'un dodécagone régulier, mais parallèles à des côtés consécutifs d'un dodécagone régulier. On pourra ainsi continuer l'enchaînement régulier de réseaux de diffraction en suivant un tracé en spirale.

On voit que chaque réseau de diffraction, excepté les réseaux de diffraction aux extrémités de l'enchaînement de réseaux de diffraction, reçoit deux fois la même portion de faisceau lumineux initial. Soient $n$ réseaux de diffraction, on augmente ainsi le pouvoir de résolution, à pas de réseau et largeur de faisceau identiques, d'un facteur $2*(n-1)$. En d'autres termes, à pouvoir de résolution égal, on divise le diamètre du faisceau lumineux initial par un facteur $2*(n-1)$. Une limitation au nombre de réseaux est l'élargissement du faisceau diffracté au fur et à mesure des passages sur les réseaux de diffraction. On peut également remarquer qu'une distance focale d'une lentille de focalisation (non représentée) servant à focaliser un sous-faisceau final sur le photo-détecteur est également divisée par un facteur $2*(n-1)$.

Le domaine de l'invention est plus particulièrement celui de la spectrométrie infrarouge (longueurs d'onde comprises par exemple entre 1000 nm et 2000 nm).

On voit que comme précédemment, pour un angle d'incidence de 60,2° du faisceau lumineux initial 440 sur le premier réseau de diffraction 401, le sous-faisceau 444 est dirigé selon la même direction que la réflexion spéculaire (diffraction à l'ordre 0) du faisceau lumineux initial sur le premier réseau de diffraction 401. Ensuite, cette réflexion spéculaire est diffractée sur le quatrième réseau de diffraction 404. L'ordre 0 de cette diffraction se propage dans la même direction que le sous-faisceau 448, et ainsi de suite jusqu'au photo-détecteur 41. A chaque diffraction, il y a une perte énergétique. Ainsi, la réflexion spéculaire incidente sur le photo-détecteur, correspondant à des diffractions successives à l'ordre 0, présente une énergie lumineuse suffisamment faible pour ne pas perturber la détection en aveuglant le photo-détecteur.

Selon une variante non représentée, on dispose, par exemple à la place du photo-détecteur, un élément déflecteur adapté à dévier un faisceau lumineux de 180° en le translatant parallèlement à lui-même. On peut par exemple utiliser un ou deux prismes en toit. On peut également utiliser deux miroir inclinés à 90° l'un par rapport à l'autre pour former un coin, l'un premier des miroirs recevant un faisceau lumineux avec un angle d'incidence de 45°. Ainsi, un sous-faisceau émergeant des moyens de dispersion spectrale revient vers ces derniers. On double ainsi le nombre des passages sur les réseaux de diffraction. On dispose alors un photo-détecteur de façon à recevoir le sous-faisceau obtenu. On peut prévoir plusieurs éléments déflecteurs, pour multiplier d'autant le nombre de passages sur les moyens de dispersion spectrale.

On pourra envisager différentes variantes des modes de réalisation des Figures 3 et 4, par exemple en adaptant le pas des réseaux de diffraction à une longueur d'onde centrale du faisceau lumineux initial.

L'invention n'est pas limitée aux exemples qui viennent d'être décrits, et on pourra envisager de nombreuses variantes et modes de réalisation sans sortir du cadre de la présente invention. Par exemple, on pourra envisager d'autres types de polygones réguliers qu'un dodécagone, par exemple un hexagone. On pourra combiner différentes caractéristiques provenant des différents modes de réalisation, sans sortir du cadre de la présente invention, et dans la mesure où l'effet technique recherché est toujours obtenu. Par exemple, une disposition en spirale des réseaux de diffraction, disposés parallèlement à des côtés consécutifs d'un polygone convexe, pourra être réalisée quels que soient les autres paramètres du spectromètre selon l'invention. Le faisceau lumineux initial pourra être émis en continu, ou par impulsion, typiquement une unique impulsion.

**Revendications**

1. Spectromètre (20 ; 30 ; 40) comprenant :

   - des moyens de dispersion spectrale (22) d'un faisceau lumineux initial (240 ; 340) ; et
   - un photo-détecteur (21; 31 ; 41), pour mesurer l'intensité lumineuse d'un faisceau lumineux incident ;

   **caractérisé en ce que** le spectromètre (20 ; 30 ; 40) ne forme pas une cavité fermée, et **en ce que** les moyens de dispersion spectrale (22) comprennent au moins trois réseaux de diffraction en réflexion (201, 202, 203 ; 301, 302, 303 ; 401, 402, 403, 404, 405, 406, 407) parallèles à des côtés consécutifs d'un polygone convexe (23 ; 43), disposés de sorte que :

   - une portion du faisceau lumineux initial (240 ; 340) est diffractée tour à tour par chacun des réseaux de diffraction et est diffractée au moins une deuxième fois par au moins un des réseaux de diffraction, cette portion du faisceau lumineux initial formant le faisceau lumineux incident sur le photo-détecteur; et
   - le chemin optique suivi par ladite portion de faisceau lumineux relie directement, c'est-à-dire sans réflexion intermédiaire sur un miroir intercalaire, un premier réseau de diffraction (201 ; 301 ; 401,404,406) à un deuxième réseau de diffraction (202 ; 302 ; 402, 403, 405), le deuxième réseau de diffraction à un troisième réseau de diffraction (203 ; 303 ; 403, 405, 407), et le troisième réseau de diffraction au premier réseau de diffraction.

2. Spectromètre (20 ; 30 ; 40) selon la revendication 1, **caractérisé en ce que** les réseaux de diffraction en réflexion (201, 202, 203 ; 301, 302, 303 ; 401, 402, 403, 404, 405, 406, 407) sont alignés sur les côtés consécutifs du polygone convexe (23 ; 43).

3. Spectromètre (20 ; 30 ; 40) selon la revendication 1 ou 2, **caractérisé en ce que** le premier réseau de diffraction (201 ; 301 ; 401, 404, 406) est disposé entre le deuxième réseau de diffraction (202 ; 302 ; 402, 403, 405) et le troisième réseau de diffraction (203 ; 303 ; 403, 405, 407), le long du polygone convexe (23 ; 43), et **en ce que** les premier, deuxième et troisième réseaux de diffraction sont disposés de sorte que :

  - le premier réseau de diffraction (201 ; 301 ; 401, 404, 406) reçoit un premier faisceau lumineux (240 ; 340 ; 440, 444, 448) et renvoie un premier sous-faisceau (241 ; 341), correspondant à la diffraction d'ordre $m_1$ du premier faisceau lumineux sur le premier réseau de diffraction, avec $m_1$ entier supérieur ou égal à l'unité ;
  - le deuxième réseau de diffraction (202 ; 302 ; 402, 403, 405) reçoit le premier sous-faisceau (241 ; 341) et renvoie un deuxième sous-faisceau (242 ; 342), correspondant à la diffraction d'ordre $m_2$ du premier sous-faisceau sur le deuxième réseau de diffraction, avec $m_2$ entier supérieur ou égal à l'unité ;
  - le troisième réseau de diffraction (203 ; 303 ; 403, 405,407) reçoit le deuxième (242 ; 342) sous-faisceau et renvoie un troisième sous-faisceau, (243 ; 343) correspondant à la diffraction d'ordre $m_3$ du deuxième sous-faisceau sur le troisième réseau de diffraction, avec $m_3$ entier supérieur ou égal à l'unité ; et
  - le premier réseau de diffraction (201 ; 301 ; 401, 404, 406) reçoit le troisième sous-faisceau (243 ; 343) et renvoie un quatrième sous-faisceau (244 ; 344), correspondant à la diffraction d'ordre $m_4$ du troisième sous-faisceau sur le premier réseau de diffraction, avec $m_4$ entier supérieur ou égal à l'unité.

4. Spectromètre (30 ; 40) selon la revendication 3, **caractérisé en ce que** les ordres $m_1$, $m_2$, $m_3$, et $m_4$ sont égaux.

5. Spectromètre (30; 40) selon la revendication 4, **caractérisé en ce que** les ordres $m_1$, $m_2$, $m_3$, et $m_4$ sont égaux à l'unité.

6. Spectromètre (30 ; 40) selon l'une quelconque des revendications 3 à 5, **caractérisé en ce qu'**un angle entre les premier et deuxième réseaux de diffraction est égal à un angle entre les premier et troisième réseaux de diffraction.

7. Spectromètre (30 ; 40) selon l'une quelconque des revendications 1 à 6, **caractérisé en ce que** les réseaux de diffraction sont alignés sur des côtés consécutifs d'un polygone régulier (43).

8. Spectromètre (30 ; 40) selon l'une quelconque des revendications 1 à 7, **caractérisé en ce que** les réseaux de diffraction sont disposés de façon à ce que :

  - chaque réseau de diffraction (301, 302, 303 ; 401, 402, 403, 404, 405, 406, 407) reçoive un faisceau lumineux incident (340, 341, 342, 343), et renvoie un sous-faisceau (341,342,343,344) correspondant à la diffraction d'ordre $m_i$ du faisceau lumineux incident sur ledit réseau de diffraction, avec $m_i$ entier supérieur ou égal à l'unité ;
  - une valeur absolue d'une différence (k) entre un angle d'incidence du faisceau lumineux incident sur le réseau de diffraction, et un angle médian du sous-faisceau relativement audit réseau de diffraction, soit la même à plus ou moins six degrés près pour chaque réseau de diffraction.

9. Spectromètre (20 ; 30 ; 40) selon l'une quelconque des revendications 1 à 8, **caractérisé en ce qu'**un chemin optique suivi par ladite portion du faisceau lumineux initial relie directement un réseau de diffraction au suivant.

10. Spectromètre (30) selon l'une quelconque des revendications 1 à 9, **caractérisé en ce que** chaque réseau de diffraction (301, 302, 303) présente des rayures réfléchissantes parallèles à un axe de référence (z), et est monté sur des moyens de pivotement (311, 312, 313) autour de l'axe de référence.

11. Spectromètre (20 ; 30 ; 40) selon l'une quelconque des revendications 1 à 10, **caractérisé en ce que** chacun des réseaux de diffraction présente un même pas de réseau.

12. Spectromètre (30 ; 40) selon l'une quelconque des revendications 1 à 11, **caractérisé en ce qu'**un angle entre deux réseaux de diffraction consécutifs est compris entre 140 ° et 160 °, et **en ce que** chaque réseau de diffraction présente une densité de traits égale à 1740 traits par millimètre.

13. Procédé d'utilisation d'un spectromètre (30 ; 40) selon l'une quelconque des revendications 1 à 12, **caractérisé en ce que** l'on adapte ledit spectromètre à une longueur d'onde centrale du faisceau lumineux incident (240 ; 340 ; 440) en pivotant chacun des réseaux de diffraction alternativement d'un angle θ et d'un angle -θ.

**Patentansprüche**

1. Spektrometer (20 ; 30 ; 40), umfassend :

   - Einrichtungen zur Spektraldispersion (22) eines anfänglichen Lichtbündels (240 ; 340) ; und
   - einen Fotodetektor (21 ; 31 ; 41), um die Lichtstärke eines einfallenden Lichtbündels zu messen ;

   **dadurch gekennzeichnet, dass** das Spektrometer (20 ; 30 ; 40) keinen geschlossenen Hohlraum bildet, und dadurch, dass die Spektraldispersionseinrichtungen (22) wenigstens drei Reflexionsbeugungsgitter umfassen (201, 202, 203 ; 301, 302, 303 ; 401, 402, 403, 404, 405, 406, 407), die parallel sind zu den konsekutiven Seiten eines konvexen Polygons (23 ; 43), die so angeordnet sind :

   - dass ein Teil des anfänglichen Lichtbündels (240 ; 340) nacheinander durch jedes der Beugungsgitter gebeugt wird und wenigstens ein zweites Mal durch mindestens eines der Beugungsgitter gebeugt wird, wobei dieser Teil des anfänglichen Lichtbündels das in den Fotodetektor einfallende Lichtbündel bildet; und
   - dass der von dem genannten Teil des Lichtbündels durchlaufene optische Weg ein erstes Beugungsgitter (201 ; 301 ; 401, 404, 406) mit einem zweiten Beugungsgitter (202 ; 302 ; 402, 403, 405), das zweite Beugungsgitter mit einem dritten Beugungsgitter (203 ; 303 ; 403, 405, 407), und das dritte Beugungsgitter mit dem ersten Beugungsgitter unmittelbar verbindet, das heißt ohne intermediäre Reflexion auf einem Zwischenspiegel,

2. Spektrometer (20 ; 30 ; 40) nach Anspruch 1, **dadurch gekennzeichnet, dass** die Reflexionsbeugungsgitter (201, 202, 203 ; 301, 302, 303 ; 401, 402, 403, 404, 405, 406, 407) an den konsekutiven Seiten des konvexen Polygons aufgereiht sind.

3. Spektrometer (20 ; 30 ; 40) nach Anspruch 1 oder 2, **dadurch gekennzeichnet, dass** das erste Beugungsgitter (201 ; 301 ; 401, 404, 406) zwischen dem zweiten Beugungsgitter (202 ; 302 ; 402, 403, 405) und dem dritten Beugungsgitter (203 ; 303 ; 403, 405, 407) längs des konvexen Polygons (23; 43) angeordnet ist, und dadurch, dass das erste, das zweite und das dritte Beugungsgitter so angeordnet sind :

   - dass das erste Beugungsgitter (201 ; 301 ; 401, 404, 406) ein erstes Lichtbündel (240 ; 340 ; 440, 444, 448) empfängt und ein erstes Teilbündel (241 ; 341) reflektiert, entsprechend der Beugungsordnung $m_1$ des ersten Lichtbündels auf dem ersten Beugungsgitter, mit $m_1$ als ganzer Zahl größer oder gleich der Einheit;
   - dass das zweite Beugungsgitter (202 ; 302 ; 402, 403, 405) das erste Teilbündel (241 ; 341) empfängt und ein zweites Teilbündel (242 ; 342) reflektiert, entsprechend der Beugungsordnung $m_2$ des ersten Teilbündels auf dem zweiten Beugungsgitter, mit $m_2$ als ganzer Zahl größer oder gleich der Einheit;
   - dass das dritte Beugungsgitter (203 ; 303 ; 403, 405, 407) das zweite Teilbündel (242 ; 342) empfängt und ein drittes Teilbündel (243 ; 343) reflektiert, entsprechend der Beugungsordnung $m_3$ des zweiten Teilbündels auf dem dritten Beugungsgitter, mit $m_3$ als ganzer Zahl größer oder gleich der Einheit; und
   - dass das erste Beugungsgitter (201 ; 301 ; 401, 404, 406) das dritte Teilbündel (243 : 343) empfängt und ein viertes Teilbündel (244 ; 344) reflektiert, entsprechend der Beugungsordnung $m_4$ des dritten Teilbündels auf dem ersten Beugungsgitter, mit $m_4$ als ganzer Zahl größer oder gleich der Einheit.

4. Spektrometer (30 ; 40) nach Anspruch 3, **dadurch gekennzeichnet, dass** die Ordnungen $m_1$, $m_2$, $m_3$, und $m_4$ gleich sind.

5. Spektrometer (30 ; 40) nach Anspruch 4, **dadurch gekennzeichnet, dass** die Ordnungen $m_1$, $m_2$, $m_3$, und $m_4$ gleich der Einheit sind.

6. Spektrometer (30 ; 40) nach einem der Ansprüche 3 bis 5, **dadurch gekennzeichnet, dass** ein Winkel zwischen dem ersten und dem zweiten Beugungsgitter gleich einem Winkel zwischen dem ersten und dem dritten Beugungsgitter ist.

7. Spektrometer (30 ; 40) nach einem der Ansprüche 1 bis 6, **dadurch gekennzeichnet, dass** die Beugungsgitter nach den konsekutiven Seiten eines regelmäßigen Polygons ausrichten.

8. Spektrometer (30 ; 40) nach einem der Ansprüche 1 bis 7, **dadurch gekennzeichnet, dass** die Beugungsgitter so angeordnet sind :

- dass jedes Beugungsgitter (301, 302, 303 ; 401, 402, 403, 404, 405, 406, 407) ein einfallendes Lichtbündel (340, 341, 342, 343) empfängt und ein Teilbündel (341, 342, 343, 344) reflektiert, das der Beugungsordnung $m_i$ des auf dem genannte Beugungsgitter eintreffenden Lichtbündels entspricht, mit $m_i$ als ganzer Zahl größer oder gleich der Einheit;
- dass ein absoluter Wert einer Differenz (k) zwischen einem Einfallwinkel des auf dem Beugungsgitter eintreffenden Lichtstrahls und einem Medianwinkel des Teilbündels, bezogen auf das genannte Beugungsgitter, für jedes Beugungsgitter gleich ist bis auf plus/minus sechs Grad.

9. Spektrometer (20 ; 30 ; 40) nach einem der Ansprüche 1 bis 8, **dadurch gekennzeichnet, dass** ein von dem genannten anfänglichen Lichtbündel verfolgter optischer Weg ein Beugungsgitter direkt mit dem nachfolgenden verbindet.

10. Spektrometer (30) nach einem der Ansprüche 1 bis 9, **dadurch gekennzeichnet, dass** jedes Beugungsgitter (301, 302, 303) reflektierende, zu einer Bezugsachse (z) parallele Streifen aufweist und auf um die Bezugsachse schwenkbare Einrichtungen (311, 312, 313) montiert ist.

11. Spektrometer (20 ; 30 ; 40) nach einem der Ansprüche 1 bis 10, **dadurch gekennzeichnet, dass** jedes der Beugungsgitter eine selbe Gitterteilung aufweist.

12. Spektrometer (30 ; 40) nach einem der Ansprüche 1 bis 11, **dadurch gekennzeichnet, dass** ein Winkel zwischen zwei konsekutiven Beugungsgittern zwischen 140 ° und 160 ° enthalten ist, und dass jedes Beugungsgitter eine Strichdichte gleich 1740 Striche pro Millimeter aufweist.

13. Verfahren zur Benutzung eines Spektrometers (30 ; 40) nach einem der Ansprüche 1 bis 12, **dadurch gekennzeichnet, dass** man das genannte Spektrometer an eine zentrale Wellenlänge des einfallenden Lichtstrahls (240 ; 340 ; 440) anpasst, indem man jedes der Beugungsgitter alternierend um einen Winkel $\theta$ und einen Winkel $-\theta$ schwenkt.

## Claims

1. Spectrometer (20; 30; 40) comprising:

- spectral dispersion means (22) of an initial light beam (240; 340); and
- a photodetector (21; 31; 41), to measure the light intensity of an incident light beam;

**characterised in that** the spectrometer (20; 30; 40) does not constitute a closed cavity, and **in that** the spectral dispersion means (22) comprise at least three reflective diffraction gratings (201, 202, 203; 301, 302, 303; 401, 402, 403, 404, 405, 406, 407) parallel to consecutive sides of a convex polygon (23; 43), arranged such that:

- a portion of the initial light beam (240; 340) is diffracted once by each of the diffraction gratings in turn and is diffracted at least a second time by at least one of the diffraction gratings, this portion of the initial light beam forming the incident light beam on the photodetector; and
- the optical path followed by said portion of light beam directly connects a first diffraction grating (201; 301; 401, 404, 406) to a second diffraction grating (202; 302; 402, 403, 405), the second diffraction grating to a third diffraction grating (203; 303; 403, 405, 407), and the third diffraction grating to the first diffraction grating, that is to say without intermediate reflection.

2. Spectrometer (20; 30; 40) according to claim 1, **characterised in that** the reflective diffraction gratings (201, 202, 203; 301, 302, 303; 401, 402, 403, 404, 405, 406, 407) are aligned on the consecutive sides of the convex polygon (23; 43).

3. Spectrometer (20; 30; 40) according to claim 1 or 2, **characterised in that** the first diffraction grating (201; 301;

401,404,406) is arranged between the second diffraction grating (202; 302; 402, 403, 405) and the third diffraction grating (203; 303; 403, 405, 407), along the convex polygon (23; 43), and **in that** the first, second and third diffraction gratings are arranged such that:

- the first diffraction grating (201; 301; 401, 404, 406) receives a first light beam (240; 340; 440, 444, 448) and returns a first sub-beam (241; 341), corresponding to the $m_1$ order diffraction of the first light beam on the first diffraction grating, where $m_1$ is an integer greater than or equal to 1;
- the second diffraction grating (202; 302; 402, 403, 405) receives the first sub-beam (241; 341) and returns a second sub-beam (242; 342), corresponding to the $m_2$ order diffraction of the first sub-beam on the second diffraction grating, where $m_2$ is an integer greater than or equal to 1;
- the third diffraction grating (203; 303; 403, 405, 407) receives the second sub-beam (242; 342) and returns a third sub-beam (243; 343) corresponding to the $m_3$ order diffraction of the second sub-beam on the third diffraction grating, where $m_3$ is an integer greater than or equal to 1; and
- the first diffraction grating (201; 301; 401, 404, 406) receives the third sub-beam (243; 343) and returns a fourth sub-beam (244; 344), corresponding to the $m_4$ order diffraction of the third sub-beam on the first diffraction grating, where $m_4$ is an integer greater than or equal to 1.

4. Spectrometer (30; 40) according to claim 3, **characterised in that** the orders $m_1$, $m_2$, $m_3$, and $m_4$ are equal.

5. Spectrometer (30; 40) according to claim 4, **characterised in that** the orders $m_1$, $m_2$, $m_3$, and $m_4$ are equal to 1.

6. Spectrometer (30; 40) according to any one of claims 3 to 5, **characterised in that** an angle between the first and second diffraction gratings is equal to an angle between the first and third diffraction gratings.

7. Spectrometer (30; 40) according to any one of claims 1 to 6, **characterised in that** the diffraction gratings are aligned on consecutive sides of a regular polygon (43).

8. Spectrometer (30; 40) according to any one of claims 1 to 7, **characterised in that** the diffraction gratings are arranged such that:

- each diffraction grating (301, 302, 303; 401, 402, 403, 404, 405, 406, 407) receives an incident light beam (340, 341, 342, 343), and returns a sub-beam (341, 342, 343, 344) corresponding to the $m_i$ order diffraction of the incident light beam on said diffraction grating, where $m_i$ is an integer greater than or equal to 1;
- an absolute value of a difference (k) between an angle of incidence of the incident light beam on the diffraction grating, and a median angle of the sub-beam relative to said diffraction grating, is the same within plus or minus six degrees for each diffraction grating.

9. Spectrometer (20; 30; 40) according to any one of claims 1 to 8, **characterised in that** an optical path followed by said portion of the initial light beam directly connects one diffraction grating to the next.

10. Spectrometer (30) according to any one of claims 1 to 9, **characterised in that** each diffraction grating (301, 302, 303) has reflecting stripes parallel to a reference axis (z), and is mounted on means (311, 312, 313) of pivoting about the reference axis.

11. Spectrometer (20; 30; 40) according to any one of claims 1 to 10, **characterised in that** each diffraction grating has an identical grating pitch.

12. Spectrometer (30; 40) according to any one of claims 1 to 11, **characterised in that** un angle between two consecutive diffraction gratings is between 140° and 160°, and **in that** each diffraction grating has a line density equal to 1740 lines per millimeter.

13. Method of using a spectrometer (30; 40) according to any one of claims 1 to 12, **characterised in that** said spectrometer is adapted to a central wavelength of the incident light beam (240; 340; 440) by pivoting each diffraction grating by an angle θ and by an angle -θ alternately.

FIG.1

FIG.2

30

31

344

352

340    342    303

313

k

343

k

k    y

k    z    x

341  301

302    311

312

**FIG.3**

407

41

406

40    452

405

448

43    444    404

403

**FIG.4**    401

440    402

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9913543 A
- US 20020135879 A